# EUROPÄISCHE PATENTANMELDUNG

(11) **EP 3 542 927 A1**
(43) Veröffentlichungstag der Anmeldung: **25.09.2019**
(21) Anmeldenummer: 18162870.2
(22) Anmeldetag: 20.03.2018
(51) Int. Cl.: B22F 3/105, G06F 17/00, B33Y 10/00, B29C 64/153

(54) **VERFAHREN ZUM SELEKTIVEN BESTRAHLEN EINER MATERIALSCHICHT, VERFAHREN ZUM BEREITSTELLEN EINES DATENSATZES, VORRICHTUNG UND COMPUTERPROGRAMMPRODUKT**

(71) Anmelder: Siemens Aktiengesellschaft, 80333 München (DE)
(72) Erfinder: Geisen, Ole, 10781 Berlin (DE)

(57) **Zusammenfassung**

Es wird ein Verfahren zum selektiven Bestrahlen einer Materialschicht (S) in der additiven Herstellung angegeben. Das Verfahren umfasst das:
- Bereitstellen von Geometriedaten mit Geometrieinformationen einzelner Schichten (S) eines additiv herzustellenden Bauteils (S), und das
- Definieren eines Bestrahlungsmusters (BM) für die Schichten (S) mittels eines rechnergestützten Fertigungsverfahrens, wobei das Bestrahlungsmuster (BM) schichtweise eine Kontur (S) und einen Flächenbereich (FB) umfasst, wobei erste Konturvektoren (KV1) der Kontur (K) für einen kontinuierlichen Bestrahlungsbetrieb und zweite Konturvektoren (KV2) der Kontur (K) für einen gepulsten Bestrahlungsbetrieb festgelegt werden. Weiterhin werden ein Verfahren zum Bereitstellen eines Datensatzes, ein additives Herstellungsverfahren, eine entsprechende Vorrichtung, sowie ein entsprechendes Computerprogrammprodukt angegeben.

## Beschreibung

Die vorliegende Erfindung betrifft ein Verfahren zum selektiven Bestrahlen einer Materialschicht, ein Verfahren zum Bereitstellen eines Datensatzes, ein additives Herstellungsverfahren, eine Vorrichtung zum selektiven Bestrahlen einer Materialschicht in der additiven Herstellung, sowie ein entsprechendes additives Herstellungsverfahren und ein Computerprogrammprodukt.

Additive Verfahren zur Herstellung oder Instandsetzung bzw. Service oder Reparatur von Bauteilen umfassen beispielsweise als Pulverbettverfahren das selektive Laserschmelzen (SLM) oder Lasersintern (SLS) oder das Elektronenstrahlschmelzen (EBM). Ebenso zählt das Laserauftragschweißen (LMD) zu den additiven Verfahren.

Additive Fertigungsverfahren (englisch: "additive manufacturing") haben sich als besonders vorteilhaft für komplexe oder kompliziert oder filigran designte Bauteile, beispielsweise labyrinthartige Strukturen, Kühlstrukturen und/oder Leichtbau-Strukturen erwiesen. Insbesondere ist die additive Fertigung durch eine besonders kurze Kette von Prozessschritten vorteilhaft, da ein Herstellungs- oder Fertigungsschritt eines Bauteils auf Basis eines Geometriedatensatzes, beispielsweise einer entsprechenden CAD-Datei erfolgen kann.

Die vorliegende Offenbarung bezieht sich vorzugsweise auf Bauteile, welche für den Einsatz in einer Strömungsmaschine, vorzugsweise im Heißgaspfad einer Gasturbine vorgesehen sind. Das Bauteil besteht vorzugsweise aus einer Superlegierung, insbesondere einer nickel- oder kobaltbasierten Superlegierung. Die Legierung kann ausscheidungsgehärtet oder ausscheidungshärtbar sein.

Ein Verfahren zum Herstellen von Bauteilen aus einem in pulverförmigen Basismaterial mittels eines Laserstrahls im Pulsbetrieb ist beispielsweise bekannt aus EP 2 424 706 B1.

Trotz der immer größer werdenden Relevanz additiver Herstellungsprozesse für viele Industriebereiche und eine große Zahl von Entwicklungen, welche sich die Industrialisierung der additiven Prozesse zur Aufgabe gemacht haben, bestehen Schwierigkeiten, einen Energieeintrag des entsprechenden für die Verfestigung der Bauteilschicht genutzten Energiestrahls zugunsten der gewünschten Bauteilstruktur zu kontrollieren. Insbesondere bei filigranen Geometrien oder überhängenden Bereichen der herzustellenden Bauteile, welche die additiven Prozesse ja gerade für die Herstellung prädestinieren, besteht die Schwierigkeit, die Bestrahlungsparameter zu kontrollieren und auch eine entsprechend geeignete Bestrahlungsstrategie zu wählen. Kompliziert wird der Aufbau dieser filigranen Bereiche noch durch den Wärmeeintrag bzw. die Schwierigkeit, Überhitzungen in lokal sehr begrenzten zu verfestigenden Bereichen zu vermeiden.

Selbst bei vorbestimmten Parametern für die Bestrahlung eines zu verfestigenden Bauteilbereichs unterliegen die Bestrahlungsvektoren oder Bestrahlungspfade, welche für die Verfestigung einer Pulverschicht aus dem Pulverbett gewählt werden, beispielsweise Schwankungen in der Breite, die zu Unregelmäßigkeiten im Schmelzbad und somit zu einer ungleichmäßigen Oberfläche und mangelhaften Oberflächenqualität führen können.

Es ist daher eine Aufgabe der vorliegenden Erfindung, Mittel anzugeben, welche helfen die Bestrahlung einer Pulverschicht so zu verbessern, dass optimale Struktureigenschaften der jeweils herzustellenden Bauteile in Abhängigkeit von der Geometrie und/oder dem gewählten Material resultieren. Die Verbesserungen betreffen insbesondere das Bestrahlen einer Materialschicht in der additiven Herstellung für selektive pulverbettbasierte Prozesse, wie das selektive Laserschmelzen (oder Lasersintern) und/oder das Elektronenstrahlschmelzen.

Diese Aufgabe wird durch den Gegenstand der unabhängigen Patentansprüche gelöst. Vorteilhafte Ausgestaltungen sind Gegenstand der abhängigen Patentansprüche.

Ein Aspekt der vorliegenden Erfindung betrifft ein Verfahren zum selektiven Bestrahlen einer Materialschicht in der additiven Herstellung, umfassend das Bereitstellen von Geometriedaten, vorzugsweise enthaltend Informationen einer vorbestimmten Bauteilgeometrie, mit Geometrieinformationen einzelner Schichten des herzustellenden Bauteils. Die Geometriedaten können beispielsweise in einem Geometriedatensatz bereitgestellt, d.h. hochgeladen oder generiert oder anderweitig eingelesen werden.

Das Verfahren umfasst weiterhin das Definieren eines Bestrahlungsmusters für die Schichten des Bauteils mittels eines rechnergestützten Fertigungsverfahrens, insbesondere eines CAM-Verfahrens, wobei das Bestrahlungsmuster schichtweise eine Kontur oder einen Konturbereich und einen, beispielsweise innerhalb der Kontur liegenden, Flächenbereich umfasst, wobei erste Konturvektoren der Kontur für einen kontinuierlichen Bestrahlungsbetrieb und zweite - von den ersten Konturvektoren verschiedene - Konturvektoren der Kontur für einen gepulsten oder zeitlich modulierten Bestrahlungsbetrieb festgelegt, übergeben oder gespeichert werden.

Ein "Konturvektor" kann insbesondere einen Bestrahlungspfad am Rande einer, beispielsweise in Aufsicht auf das Pulverbett betrachtete, Bauteilschicht bezeichnen, welche einen inneren oder aber auch einen äußeren Rand des Bauteils definiert.

Durch die Kombination von kontinuierlicher und gepulster oder modulierter Bestrahlung, beispielsweise seiner Pulverschicht, für die additive Herstellung einer Bauteilkontur durch einen Energiestrahl, beispielsweise einen Laser- oder Elektronenstrahl, ist es möglich, insbesondere verbesserte Oberflächen- und/oder Struktureigenschaften in Randbereichen des Bauteils, Problemzonen oder "hot spots", also Bereichen, welche während der Herstellung besonders anfällig für lokale Überhitzungen sind, zu erreichen.

Es versteht sich, dass eine solche Wahl von Bestrahlungsparametern und/oder Geometrien in der additiven Herstellung schichtweise kaum manuell durchgeführt werden können, sondern computerunterstützt mittels CAM, durchgeführt werden müssen, damit die Herstellung adäquat und wirtschaftlich erfolgen kann.

Beispielsweise kann im Wege der Vorbereitung der eigentlichen additiven Herstellung einer Pulverschicht, welche für die Herstellung des Bauteils beispielsweise mit einem Laser selektiv bestrahlt werden soll, zunächst ein innenliegender Bereich oder Flächenbereich ausgewählt werden, welcher anschließend mit einem Energiestrahl bestrahlt und verfestigt wird. Danach wird üblicherweise ein Konturbereich, welcher den Flächenbereich lateral umgeben kann, ausgewählt. Dieser Konturbereich wird bei der anschließenden eigentlichen Herstellung zweckmäßigerweise nach dem Flächenbereich bestrahlt. Dadurch können insbesondere strukturelle Ausläufe oder Ungenauigkeiten des Flächenbereichs ausgeglichen oder geglättet werden.

Gemäß der vorliegenden Erfindung umfasst nun die Konturbestrahlung bzw. die entsprechende Festlegung oder Definition der Bestrahlungsparameter einen kontinuierlichen und modulierten Bestrahlungsbetrieb, wobei die modulierte Kontur nun diesen genannten Glättungseffekt möglicherweise nicht mehr bewirken kann. Jedoch kann die gewählte modulierte oder im gepulsten Betrieb bestrahlte Kontur, über welche dann die Kontur der Bauteilschicht in der Herstellung erneut umgeschmolzen werden kann, die Oberflächenrauheit weiter reduzieren, und das Aufbau- oder Verfestigungsergebnis deutlich verbessern, beispielsweise zu einer verbesserten Maßhaltigkeit des entsprechend aufgebauten Bereichs führen.

Das eigentliche Definieren des Bestrahlungsmusters erfolgt vorzugsweise mittels einer Berechnung und/oder Simulation oder gemäß eines Algorithmus' vordefiniert.

In der eigentlichen additiven Herstellung erfolgt dann unabhängig davon, in welcher Reihenfolge die ersten und zweiten Konturvektoren des Bestrahlungsmusters definiert oder festgelegt werden, die Bestrahlung gemäß den zweiten Konturvektoren (vorzugsweise nach der Bestrahlung gemäß den ersten Konturvektoren).

In einer Ausgestaltung überlappen die ersten Konturvektoren (kontinuierlicher Bestrahlungsbetrieb) mit den zweiten Konturvektoren (gepulster Bestrahlungsbetrieb) zumindest teilweise (vgl. Ausführungsbeispiel weiter unten).

In einer Ausgestaltung überlappen die ersten Konturvektoren mit den zweiten Konturvektoren vollständig.

In einer Ausgestaltung gibt es keinen Überlapp zwischen den ersten Konturvektoren und den zweiten Konturvektoren.

In einer Ausgestaltung umfassen die Konturbereiche, beispielsweise dünne Wände, Überhänge oder innenliegende Strukturen oder Merkmale des Bauteils mit einer definierten oder vorgegebenen Oberflächen- oder Strukturgüte und/oder Maßhaltigkeitstoleranz. Mit anderen Worten sind die Konturbereiche vorzugsweise besonders schwierig herzustellende Bereiche des Bauteils, welche mit einer im Vergleich zu inneren Bereichen oder Flächenbereichen des Bauteils verschiedenen Bestrahlungsstrategie behandelt werden müssen, um ausreichende Materialeigenschaften und eine ausreichende Maßhaltigkeit zu erzielen.

In einer Ausgestaltung wird das Bestrahlungsmuster abhängig von einem Überhangwinkel einzelner Querschnittsbereiche des Bauteils definiert.

Ein "Querschnittsbereich" ist vorzugsweise ein Bereich des Bauteils, welcher während der Herstellung entsprechend seiner Schichtunterteilung freiliegt bzw. die Schichtunterteilung vorgibt. Je nachdem ob es sich also um eine überhängende Bauteilkontur (sog. "upskin"-Vektor) oder beispielsweise eine senkrechte, vertikal nach oben gerichtete Bauteilkontur handelt, werden die Bestrahlungsparameter vorzugsweise gemäß der vorliegenden Erfindung von einer Datenverarbeitungseinrichtung oder einem Computer entsprechend eingestellt und/oder vorgeschlagen.

In einer Ausgestaltung werden für die Definition des Bestrahlungsmusters weitere Bestrahlungsparameter wie Vektorlänge, Pulslänge, Scan- und/oder Bestrahlungsgeschwindigkeit, Laserleistung, Spur- oder Streifenabstand (sog. "hatch" abstand), Streifenbreite und/oder weitere Parameter festgelegt.

In einer Ausgestaltung weist eine Vektorlänge der ersten und/oder der zweiten Konturvektoren der Kontur eine Länge zwischen 50 und 200 µm, vorzugsweise zwischen 100 und 150 µm auf.

In einer Ausgestaltung umfassen die Bestrahlungsparameter eine Scan- oder Bestrahlungsgeschwindigkeit von weniger als 200 mm/s.

In einer Ausgestaltung generieren die zweiten Bestrahlungsvektoren (während der eigentlichen additiven Herstellung) - im Vergleich zu den ersten Bestrahlungsvektoren der Kontur - ein kleineres Schmelzbad, was zur Folge hat, dass die Oberflächen- oder Strukturgüte des entsprechend bestrahlten Bereichs verbessert werden kann.

In einer Ausgestaltung wird ein Strahlversatz von benachbarten (ersten oder zweiten) Bestrahlungsvektoren der Kontur zwischen 40 und 100 µm festgelegt, definiert oder eingestellt.

Ein weiterer Aspekt der vorliegenden Erfindung betrifft ein Verfahren zum Bereitstellen eines Datensatzes für das selektive Bestrahlen der Materialschicht in der additiven Herstellung, wie oben beschrieben. Das Verfahren umfasst weiterhin das Verknüpfen, Überlagern, Markieren oder Übertragen von Bestrahlungsparameter, zumindest der zweiten Konturvektoren mit den Geometriedaten in einem gemeinsamen Datensatz. Mit anderen Worten enthält der Datensatz vorzugsweise Informationen "wo und wie" Bereiche für das Bauteil bestrahlt werden.

Dementsprechend kann der Datensatz ein Datenstrukturprodukt beschreiben und/oder vorzugsweise funktionelle Daten, sowohl syntaktische als auch semantische Informationen, umfassen. Der Datensatz ist vorzugsweise ein Produkt oder Ergebnis des oben beschriebenen Verfahrens zum selektiven Bestrahlen der Materialschicht und enthält inhärent die technischen Informationen, welche - sofern an eine additive Fertigungsanlage weitergegeben - zu den erfindungsgemäßen Vorteilen führen.

Das Bereitstellen der Daten kann beispielsweise durch einen Up- oder Download, ein Einlesen einer Datei, einer Generierung einer Datei oder beispielsweise durch Austausch von Daten in einem "peer-to-peer"-Netzwerk oder auf ähnliche Weise erfolgen.

In einer Ausgestaltung enthält der Datensatz zusätzlich Materialinformationen des Bauteils bzw. eines Ausgangsmaterials dafür, welche vorzugsweise ebenfalls in dem Datensatz "verknüpft" werden.

Ein weiterer Aspekt der vorliegenden Erfindung betrifft ein Computerprogrammprodukt, umfassend Befehle, die bei der Ausführung des Programms durch einen Computer oder eine Datenverarbeitungseinrichtung, diese(n) veranlassen, das schichtweise Festlegen des Bestrahlungsmusters wie oben beschrieben und/oder das Verknüpfen der Bestrahlungsparameter der zweiten Konturvektoren mit den Geometriedaten durchzuführen.

Ein weiterer Aspekt der vorliegenden Erfindung betrifft eine Vorrichtung zum selektiven Bestrahlen der Materialschicht in der additiven Herstellung, welche geeignet ist, ein Verfahren zum selektiven Bestrahlen, wie oben beschrieben, durchzuführen, weiterhin umfassend eine Energiestrahlquelle zum selektiven Bestrahlen der Materialschicht, wobei die Vorrichtung weiterhin vorzugsweise ausgebildet ist, einen kontinuierlichen als auch einen gepulsten oder modulierten Bestrahlungsbetrieb zu ermöglichen. Demgemäß kann die Vorrichtung beispielsweise eine Energiestrahlquelle und/oder eine entsprechend ausgebildete Optik oder einen entsprechenden Modulator umfassen.

In einer Ausgestaltung umfasst die Vorrichtung einen Pulsgenerator für den oben beschriebenen gepulsten Bestrahlungsbetrieb.

In einer Ausgestaltung ist die Energiestrahlquelle eine erste Energiestrahlquelle für einen kontinuierlichen Bestrahlungsbetrieb der Kontur.

In einer Ausgestaltung umfasst die Vorrichtung mindestens eine zweite Energiestrahlquelle, vorzugsweise einen Laser, für einen gepulsten Bestrahlungsbetrieb der Kontur.

Ein weiterer Aspekt der vorliegenden Erfindung betrifft ein additives Herstellungsverfahren, umfassend das Verfahren zum selektiven Bestrahlen, wie oben beschrieben, wobei das selektive Bestrahlen mittels eines Lasers oder eines Elektronenstrahls erfolgt, und wobei die Materialschicht eine Pulverschicht ist.

In einer Ausgestaltung besteht die Pulverschicht aus einer, insbesondere gehärteten, nickel- oder kobaltbasierten Superlegierung.

In einer Ausgestaltung ist das Bauteil ein im Heißgaspfad einer Strömungsmaschine anzuwendendes oder vorgesehenes Bauteil oder eine entsprechende Komponente.

Ein weiterer Aspekt der vorliegenden Erfindung betrifft ein Bauteil, welches gemäß dem additiven Herstellungsverfahren, wie oben beschrieben, hergestellt oder herstellbar ist, weiterhin umfassend ein - im Vergleich zu einem gemäß dem Stand der Technik hergestellten Bauteil - eine um 50 bis 100 % verbesserte Oberflächen- oder Strukturgüte und/oder verbesserte Maßhaltigkeit.

Ausgestaltungen, Merkmale und/oder Vorteile, die sich vorliegend auf das Verfahren zum selektiven Bestrahlen, das Verfahren zum Bereitstellen des Datensatzes oder das Computerprogrammprodukt beziehen, können ferner die Vorrichtung, das additive Herstellungsverfahren und/oder das Bauteil betreffen, oder umgekehrt.

Weitere Einzelheiten der Erfindung werden nachfolgend anhand der Figuren beschrieben.
- Figur 1: zeigt eine schematische Schnittansicht einer additiven Herstellungsanlage sowie eines darin hergestellten Bauteils.
- Figur 2: zeigt eine schematische Ansicht eines erfindungsgemäßen Bestrahlungsmusters.
- Figur 3: zeigt eine schematische Ansicht eines alternativen erfindungsgemäßen Bestrahlungsmusters.
- Figur 4: deutet schematisch die Bestrahlung eines Bereichs eines additiv herzustellenden Bauteils gemäß dem Stand der Technik an.
- Figur 5: deutet schematisch die Bestrahlung eines Bereichs eines additiv herzustellenden Bauteils gemäß der vorliegenden Erfindung an.
- Figur 6: zeigt ein schematisches Flussdiagramm, welches Verfahrensschritte des erfindungsgemäßen Verfahrens andeutet.

In den Ausführungsbeispielen und Figuren können gleiche oder gleichwirkende Elemente jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente, zur besseren Darstellbarkeit und/oder zum besseren Verständnis übertrieben dick oder groß dimensioniert dargestellt sein.

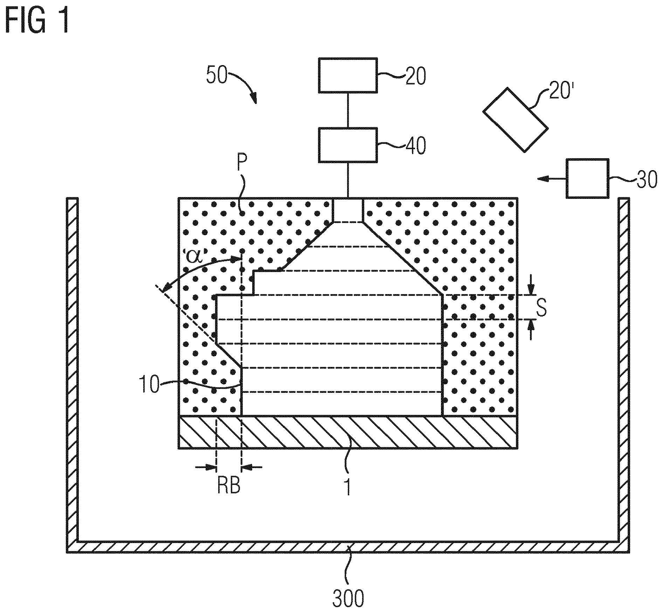

Figur 1 zeigt eine additive Herstellungsanlage 300 zur Herstellung eines Bauteils 10. Die Herstellungsanlage 300 kann (umgangssprachlich) einen "3D Drucker" bezeichnen. Vorzugsweise bezeichnet die Herstellungsanlage 300 eine Anlage zum selektiven Laserschmelzen und/oder Elektronenstrahlschmelzen (englischer Oberbegriff: "powder bed fusion").

Die Herstellungsanlage 300 umfasst eine Bauplattform 1. Auf der Bauplattform 1 ist ein Bauteil 10 während seiner additiven Herstellung gezeigt. Das Bauteil 10 ist in einem Pulverbett P angeordnet, wobei einige Bereiche (Querschnittsbereiche oder einzelne Schichten S des Bauteils 10 sind anhand der gestrichelten horizontalen Linien angedeutet) bereits durch eine Energiestrahlquelle 20 selektiv verfestigt wurden, vorzugsweise durch Exponieren oder Bestrahlung durch einen Energiestrahl, vorzugsweise einen Laserstrahls oder einen Elektronenstrahl (nicht explizit gekennzeichnet). Die Energiestrahlquelle 20 ist vorzugsweise eine erste Energiestrahlquelle.

Bei dem Bauteil 10 handelt es sich vorzugsweise um ein Bauteil, welches im Heißgaspfad einer Strömungsmaschine, beispielsweise einer Gasturbine eingesetzt wird. Insbesondere kann das Bauteil eine Lauf- oder Leitschaufel, ein Segment oder Ringsegment, ein Brennerteil oder eine Brennerspitze, eine Zarge, eine Schirmung, eine Düse, Dichtung, einen Filter, eine Mündung oder Lanze, einen Resonator, Stempel oder einen Wirbler bezeichnen, oder einen entsprechenden Übergang, Einsatz, oder ein entsprechendes Nachrüstteil.

Die Herstellungsanlage 300 umfasst vorzugsweise eine Vorrichtung 50. Die Vorrichtung 50 ist vorzugsweise eine erfindungsgemäße Vorrichtung, umfassend eine Bestrahlungsvorrichtung, wiederum umfassend die erste Energiestrahlquelle 20. Die erste Energiestrahlquelle ist vorzugsweise für die Bestrahlung einer Materialschicht des Bauteils oder für das Bauteil 10 gemäß einem kontinuierlichen Bestrahlungsbetrieb (Dauerstrichbetrieb) ausgebildet.

Die additive Herstellung des Bauteils 10 aus dem Pulverbett, umfasst beispielsweise nach dem selektiven Bestrahlen eines Schichtbereichs zur Verfestigung, das Absenken der Bauplattform 1 vorzugsweise um das einer Schichtdicke S entsprechende Maß, sowie das Auftragen einer weiteren Pulverschicht mittels eines Beschichters 30.

Es ist in Figur 1 zu erkennen, dass das Bauteil 10 (trotz seiner schematischen Darstellung) an der links dargestellten Seite einen überhängenden Randbereich RB aufweist. Der Randbereich RB erfordert vorzugsweise für die Herstellung des Bauteils 10 die Bestrahlung mit Bestrahlungsparametern, welche sich von denjenigen Parametern unterscheiden, gemäß derer beispielsweise ein innerer Flächenbereich oder bezüglich Überhitzungen weniger kritischer Bereich des Bauteils 10 bestrahlt werden muss (siehe weiter unten). Die Flächenbereiche können beispielsweise für eine verbesserte Prozesseffizienz und auf Kosten der Strukturauflösung mit einem größeren Strahlversatz bestrahlt werden.

Anders als in Figur 1 dargestellt, kann der Randbereich ein umfänglicher Randbereich des Bauteils 10 sein.

Insbesondere ist der Randbereich RB durch seinen Überhang (vergleiche Überhangwinkel α) besonders anfällig für Strukturdefekte während der Herstellung, wie ein fehlerhaftes Umschmelzergebnis oder Überhitzungen während der Herstellung, da die Wärme unterhalb des Überhangs durch das quasiwärmeisolierende Pulverbett P wesentlich schlechter abgeführt werden kann, als dies durch die bisher aufgebaute Struktur des Bauteils 10 der Fall ist.

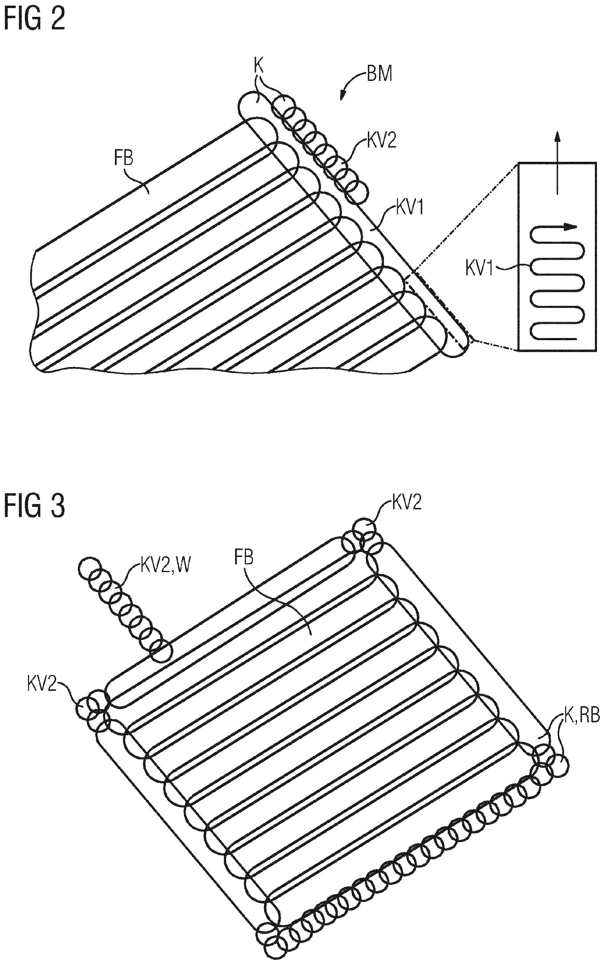

Vorzugsweise wird ein innerer Bereich oder Flächenbereich FB des Bauteils 10 für seine Herstellung zuerst bestrahlt. Anschließend wird vorzugsweise zum Glätten von Ausläufen des verfestigten Materials eine Kontur mit veränderten Bestrahlungsparametern "nachgefahren". Die Kontur kann vorliegend den oben genannten Randbereich RB des Bauteils 10 umfassen (vergleiche ebenfalls Figur 3 weiter unten).

Gemäß der vorliegenden Erfindung wird die Kontur (vergleiche Bezugszeichen K in den weiter unten beschriebenen Figuren) nun zunächst kontinuierlich bestrahlt, das heißt gemäß der ersten (kontinuierlichen) Konturvektoren KV1. Anschließend wird dieser Bereich, mit zweiten (gepulsten oder modulierten) Konturvektoren KV2 (siehe unten) bestrahlt, was insbesondere bei Bereichen RB des Bauteils 10, welche zu Strukturdefekten neigen, das Verfestigungsergebnis entscheidend verbessert, da der Energieeintrag in das Material durch die Pulsung oder Modulation der Energiestrahlung, beispielsweise durch einen (Ultra-)Kurzpulslaser, sehr viel besser dosiert, und gemäß der individuellen Geometrie und des gewählten Bauteilmaterials eingestellt werden kann.

So erfordert beispielsweise die Herstellung des Randbereichs RB bzw. der Kontur K des Bauteils 10 - im Gegensatz zu anderen Bereichen - die Verringerung der Strahlungsleistung in das Material. Ansonsten würden sehr feine Bauteilbereiche (vergleiche KV2 in Figur 3) beispielsweise thermisch deformiert und/oder zu Heißrissen oder Verformungen neigen, welche das gesamte Bauteil 10 unbrauchbar machen würden, und, im Falle von starken Verformungen, sogar die Herstellungsanlage 300 bzw. den Beschichter 30 beschädigen könnten.

Mit anderen Worten bewirkt die gepulste Bestrahlung der zweiten Konturvektoren einen deutlich kontrollierten Energieeintrag in das Pulver, da ein Schmelzbaddurchmesser (vergleiche Bezugszeichen d unten) und beispielsweise auch eine Schmelzbadtiefe im gepulsten Betrieb deutlich geringer ausfallen als im kontinuierlichen Betrieb. In der Folge können kleinere Schmelzbilder erzeugt werden, die insbesondere überhaupt erst die Bestrahlung von dünnen Wänden, zum Beispiel mit einer Wandstärke oder Strukturdicke von weniger als 120 und 300 µm, ermöglichen. Die genannte Wandstärke entspricht in etwa dem dreifachen Maß des Strahlversatzes bei der Flächenbestrahlung (vergleiche Bezugszeichen v unten).

Für die beschriebene Bestrahlungsstrategie weist die Vorrichtung 50 beispielsweise einen Pulsgenerator oder Pulsmodulator 40 auf. Mittels des Pulsmodulators 40, welcher vorzugsweise im gezeigten Strahlengang der Figur 1 an- und ausgeschaltet werden kann, kann vorzugsweise die gleiche Energiestrahlquelle (erste Energiestrahlquelle 20) für die Bestrahlung der ersten Konturvektoren 1KV und der zweiten Konturvektoren 2KV herangezogen werden. Es kann also mit Vorteil auf eine zweite Energiestrahlquelle, beispielsweise einen Kurzpulslaser, verzichtet werden.

Vorzugsweise ist der Pulsmodulator in der beschriebenen Vorrichtung oder Herstellungsanlage 300 ausgebildet, eine durchschnittliche Laserleistung zwischen 200 und 400 W, eine maximale Laserleistung zwischen 100 und 1000 W, eine Pulsrate zwischen 1 und 50 Hz, beispielsweise 10 Hz oder deutlich höher, und eine Pulsdauer im Millisekundenbereich, beispielsweise zwischen 1 und 100 ms, einzustellen.

Gemäß einer alternativen Ausgestaltung umfasst die Vorrichtung 50 eine zweite Energiestrahlquelle 20'. Die zweite Energiestrahlquelle 20' ist vorzugsweise für die Bestrahlung der Materialschicht des oder für das Bauteil 10 gemäß dem gepulsten oder zeitlich modulierten Bestrahlungsbetrieb (vergleiche zweite Konturvektoren 2KV) ausgebildet. Eine zweite Energiestrahlquelle 20' ermöglicht vorteilhafterweise eine größere Bandbreite der genannten Parameter als auch mehr Freiheitsgrade für die zeitliche Pulsmodulation im Gegensatz zum Einsatz des oben genannten Pulsmodulators 40.

Gemäß der vorliegend beschriebenen Erfindung (vergleiche ebenfalls die im folgenden beschriebenen Figuren, welche das Verfahren zum selektiven Bestrahlen sowie das Computerprogrammprodukt betreffen) kann das Bauteil beispielsweise - im Vergleich zu einem gemäß dem Stand der Technik hergestellten Bauteil - mit einer um 50 bis 100 % verbesserten Oberflächen- oder Strukturgüte und/oder entsprechend verbesserten Maßhaltigkeit hergestellt werden.

Figur 2 zeigt eine schematische Aufsicht bzw. Ansicht eines Bestrahlungsmusters BM. Das Bestrahlungsmuster BM umfasst einen Flächenbereich FB, welcher - übertragen auf eine physische Materialschicht - beispielsweise einem innen liegenden Bereich des Bauteils 10 entspricht. Das Bestrahlungsmuster BM weist weiterhin, wie oben angedeutet, eine Kontur K, umfassend erste Konturbestrahlungsvektoren KV1 sowie zweite Konturbestrahlungsvektoren KV2 auf. Die zweiten Konturvektoren KV2 entsprechen, wie oben angedeutet, Bestrahlungspfaden, welche - für die Herstellung des Bauteils nach den ersten Konturvektoren KV1 angewendet werden. Die zweiten Konturvektoren KV2 bzw. die von diesen definierten oder überdeckten Flächen (vergleiche Figur 2) betreffen zwar beide die Kontur K des Bauteils; die Vektoren (erste und zweite Konturvektoren KV 1, KV2) müssen jedoch nicht notwendigerweise deckungsgleich sein. Demgemäß kann, wie in Figur 2 dargestellt, beispielsweise die Fläche der zweiten Konturvektoren kleiner sein als die von den ersten Konturvektoren KV1 überdeckten Flächen, oder nur teilweise mit dieser überlappen.

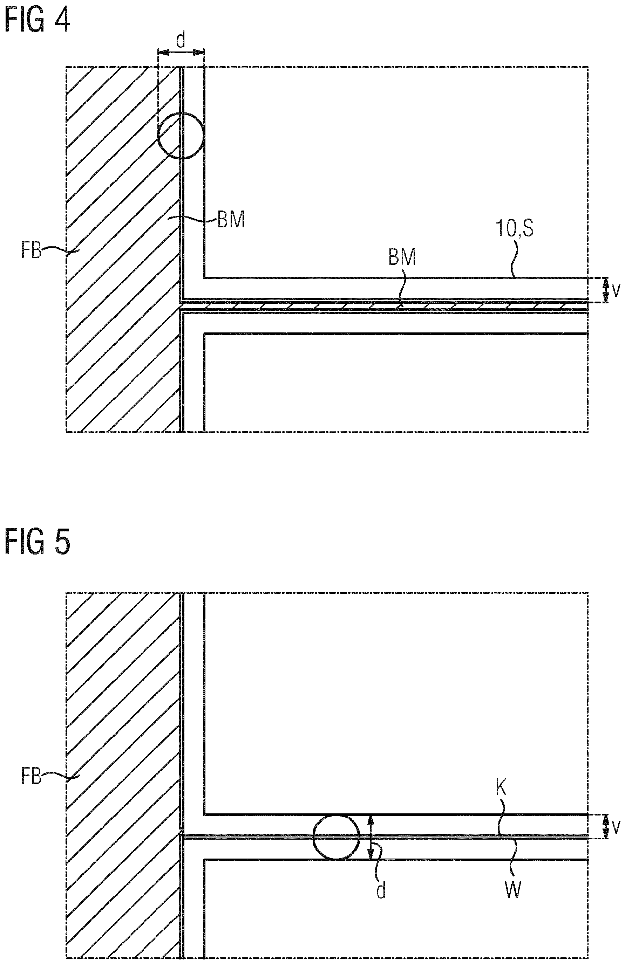

Die kleineren Flächen der zweiten Konturvektoren KV2 deuten an, dass auch das Schmelzbad in der eigentlichen Herstellung des Bauteils 10 vorzugsweise kleiner ausfällt als dasjenige für die Flächenbestrahlung bzw. für die Bestrahlung gemäß der erste Konturvektoren KV1. Rechts in der Figur 2 ist weiterhin ein typisches mäanderförmiges Bestrahlungsmuster gezeigt, gemäß welchem beispielsweise die Flächenbereiche FB oder auch die ersten Konturvektoren KV1 und/oder KV2 üblicherweise definiert sind. Demgemäß ist beispielsweise die in Figur 4 gezeigte Schraffur des Flächenbereichs lediglich eine Vereinfachung.

Das Bestrahlungsmuster BM wird vorzugsweise abhängig von dem Überhangwinkel α einzelner Querschnittsbereiche des Bauteils 10 definiert. Mit anderen Worten werden die Überhangwinkel einzelner Bereiche des Bauteils 10 bei der Festlegung des Bestrahlungsmusters BM - beispielsweise über einen entsprechenden Algorithmus oder ein Computerprogrammmodul - berücksichtigt.

Weiterhin werden - für die Definition des Bestrahlungsmusters - vorzugsweise (sämtliche) für den additiven Herstellungsprozess relevante Bestrahlungsparameter, wie Vektorlänge, Pulslänge, Scan- oder Bestrahlungsgeschwindigkeit, Laserleistung, Spur- oder Streifenabstand ("Hatch"-Abstand) und/oder Streifenbreite, entsprechend festgelegt oder angepasst (vergleiche ebenfalls Figuren 4 und 5).

Mittels dieser Parameter lässt sich beispielsweise auch die ins Pulvermaterial und/oder die verfestigte Schicht eingebrachte Strahlungsleistung oder Strahlungsenergie pro Zeitintervall genau einstellen, berechnen oder simulieren und im Rahmen der beschriebenen Ausführungsform speichern oder in einem Datensatz verknüpfen (siehe unten).

Die ersten und/oder die zweiten Konturvektoren KV1, KV2 der Kontur K können beispielsweise eine Länge zwischen 50 und 200 µm aufweisen. Eine Scangeschwindigkeit kann als Teil der Bestrahlungsparameter beispielsweise weiterhin kleiner als 200 mm/s gewählt werden.

Figur 3 zeigt eine zur Figur 3 ähnliche Abbildung, welche mit dem Bezugszeichen KV2 für zweite Konturvektoren für Strukturdefekte während der additiven Herstellung besonders anfällige Bereiche des Bauteils 10 bereits im Bestrahlungsmuster BM andeutet. Durch die durch die vorliegende Erfindung vorgeschlagene Bestrahlungsstrategie, insbesondere die an den kontinuierlichen Bestrahlungsbetrieb anschließende "Pulsung" und die entsprechend kleiner ausfallenden Wärmeeinträge bei der Bestrahlung gemäß den zweiten Konturvektoren KV2 können insbesondere kleinere Schmelzbilder erzeugt werden, die beispielsweise besonders vorteilhaft sind für die Bestrahlung von dünnen Wänden und Ecken. Ecken können vorliegend beispielsweise punktweise mit einer Pulsung von 3 bis 5 Wiederholungen bestrahlt werden.

Konkret werden gemäß der Darstellung der Figur 3 die Ecken des Bauteils 10 bzw. Bestrahlungsmusters BM sowie eine oben links gezeigte dünne Wand des Bauteils gemäß den zweiten Konturvektoren (ausschließlich gepulst) bestrahlt. Die Bestrahlung der Wand kann sogar mittels nur eines einzigen Vektors bestrahlt werden, zum Beispiel mit einer Wandstärke oder Strukturdicke von weniger als 120 und 300 µm ermöglichen.

Figur 4 deutet schematisch die Bestrahlung eines Bereichs des additiv herzustellenden Bauteils 10 an.

Im Gegensatz zur Darstellung der Figur 3 ist in Figur 4 nicht nur das Bestrahlungsmuster BM sondern ebenfalls schematisch zumindest eine additiv herzustellende oder hergestellte Bauteilschicht 10, S eingezeichnet. Der dargestellte Bereich der Bauteilschicht samt Bestrahlungsmuster BM aus Figur 4 entspricht in etwa dem oberen linken Bereich der Figur 3, enthaltend die zweiten Konturvektoren für die beschriebene Wand (vergleiche Bezugszeichen W weiter unten). Auf der linken Seite der Abbildung der Figur 4 ist der Flächenbereich FB bzw. sein Bestrahlungsmuster BM gezeigt. Dieser innere Bereich des Bauteils wird also vorzugsweise gemäß der eingezeichneten Schraffur FB kontinuierlich bestrahlt. Die Schraffur (vereinfacht) enthält äquidistant verlaufende und schräg angeordnete Bestrahlungsvektoren für die zeiteffiziente Bestrahlung der inneren Bauteilbereiche. Im oberen Bereich der Figur 4 ist ein Schmelzbaddurchmesser d als Breite des dargestellten Punktes (Schmelzbades) dargestellt. Obgleich die Darstellung der Figur 4 nicht maßstabsgetreu ist, überstreicht das Schmelzbad, welches während der Herstellung der Bauteilschicht von dem Laser entlang des Bestrahlungsmusters "verfahren" wird, bei benachbarten Bahnen/Vektoren zumindest teilweise gleiche Flächen. Mit anderen Worten werden gewöhnlich Bereiche eines zuvor verfestigten oder überstrichenen Bereichs bei einem neuen Vektor erneut aufgeschmolzen.

Im rechten Bereich der Figur 4 ist eine Wand mit dem Bezugszeichen W gekennzeichnet, welche gemäß dem Stand der Technik ebenfalls mit einer Schraffur (vergleiche Bezugszeichen BM) versehen werden muss. Diese Art der Bestrahlung führt jedoch zu einem unzureichenden Verfestigung- bzw. Herstellungsergebnis, insbesondere zu zu hohen Wärmeeinträgen, welche Defekte in der aufgebauten Struktur der Wand hervorrufen oder sogar Verformungen, welche dann zum Ausschuss des Bauteils führen. Ein vertikaler Strahlversatz ist mit dem Bezugszeichen v eingezeichnet.

Figur 5 zeigt im Gegensatz dazu eine Lösung für die Bestrahlung der Wand W gemäß der vorliegenden Erfindung. Es ist zu erkennen, dass beispielsweise im Unterschied zur Figur 4 keine Schraffur mehr für die Bestrahlung der "Wand" gewählt wird, sondern nur noch ein einziger (horizontaler) Vektor mit dem eingezeichneten Schmelzbad- oder Energiestrahldurchmesser d. Durch die vorliegend beschriebene Bestrahlungsstrategie kann die Wand mit Vorteil insgesamt dünner aufgebaut werden, als dies gegenwärtig im Stand der Technik (vergleiche Figur 4) der Fall ist. Weiterhin ist der Temperatureintrag in das später die Wand bildende Pulver durch die vorliegend beschriebene Bestrahlung geringer und die Wand W weist vorteilhafterweise eine deutlich verbesserte Maßhaltigkeit als auch Strukturgüte, beispielsweise weniger Strukturdefekte oder Risszentren auf. Die Bestrahlung der Wand W, welche in Figur 5 anhand eines einzigen vertikalen Bestrahlungsvektors exemplarisch gezeigt ist, entspricht zweckmäßigerweise der Konturbestrahlung gemäß den ersten und/oder zweiten Konturvektoren KV 1, KV2.

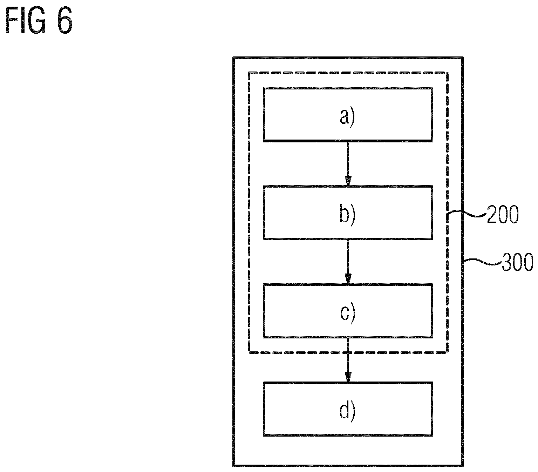

Figur 6 deutet anhand eines schematischen Flussdiagramms erfindungsgemäße Verfahrensschritte an. Die Verfahrensschritte können beispielsweise mittels einer Datenverarbeitungseinrichtung oder eines Computers 200 innerhalb der oben beschriebenen Herstellungsanlage 300 durchgeführt werden.

Das Verfahren ist vorzugsweise ein Verfahren zum selektiven Bestrahlen einer Materialschicht S in der additiven Herstellung, umfassend, a), das Bereitstellen von Geometriedaten mit Geometrieinformationen einzelner Schichten S eines additiv herzustellenden Bauteils S, beispielsweise umfassend das Hoch- oder Runterladen oder anderweitiges Einlesen der Daten, sowie, b), das Definieren eines Bestrahlungsmusters BM für die Schichten S mittels eines rechnergestützten (CAM) Fertigungsverfahrens (wie oben beschrieben), wobei das Bestrahlungsmuster BM schichtweise eine Kontur S und einen, beispielsweise innerhalb der Kontur liegenden, Flächenbereich FB umfasst, und wobei erste Konturvektoren KV1 der Kontur K für einen kontinuierlichen Bestrahlungsbetrieb und zweite Konturvektoren KV2 der Kontur K für einen gepulsten Bestrahlungsbetrieb festgelegt werden.

Gemäß der vorliegenden Erfindung werden vorzugsweise Informationen oder Daten für das selektive Bestrahlen der Materialschicht, insbesondere Bestrahlungsparameter zumindest der zweite Konturvektoren KV2 (vorzugsweise jedoch aller zu wählenden Bestrahlungsparameter) mit Geometriedaten des Bauteils 10, beispielsweise einer CAD-Datei, zusammen oder in einem gemeinsamen Datensatz DS verknüpft (vgl. c)).

Bei dem Datensatz DS kann es sich beispielsweise um ein xml-Format, ein amf-File (.amf), oder "G-Code"-Format oder ein vergleichbares Format oder einen anderen CAM-Datensatz handeln, welcher zusätzlich zu den Geometrieinformationen (CAD-Datei) beispielsweise Informationen über die gewählten Bestrahlungsparameter enthält. Mittels dieser Parameter lässt sich beispielsweise auch die ins Pulvermaterial und/oder die verfestigte Schicht eingebrachte Strahlungsleistung oder Strahlungsenergie pro Zeitintervall einstellen, berechnen und im Rahmen der beschriebenen Ausführungsform speichern.

Der Datensatz DS kann zusätzlich Materialinformationen des Bauteils 10 und/oder eines Ausgangsmaterials dafür enthalten, wobei diese ebenfalls in dem Datensatz DS mit den anderen Informationen verknüpft werden (vgl. d)).

Das Bestrahlungsmuster BM und/oder der Datensatz DS kann beispielsweise durch ein Computerprogrammprodukt festgelegt und/oder bereitgestellt werden. Das Computerprogrammprodukt kann beispielsweise auch Befehle umfassen, die bei der Ausführung des Programms durch den Computer 200, diesen veranlassen, das schichtweise Festlegen des Bestrahlungsmusters BM sowie das Verknüpfen der Information in dem gemeinsamen Datensatz DS wie oben beschrieben durchzuführen.

Die Erfindung ist nicht durch die Beschreibung anhand der Ausführungsbeispiele auf diese beschränkt, sondern umfasst jedes neue Merkmal sowie jede Kombination von Merkmalen. Dies beinhaltet insbesondere jede Kombination von Merkmalen in den Patentansprüchen, auch wenn dieses Merkmal oder diese Kombination selbst nicht explizit in den Patentansprüchen oder Ausführungsbeispielen angegeben ist.

## Patentansprüche

1. Verfahren zum selektiven Bestrahlen einer Materialschicht (S) in der additiven Herstellung, umfassend die folgenden Schritte:
- Bereitstellen von Geometriedaten mit Geometrieinformationen einzelner Schichten (S) eines additiv herzustellenden Bauteils (S),
- Definieren eines Bestrahlungsmusters (BM) für die Schichten (S) mittels eines rechnergestützten Fertigungsverfahrens, wobei das Bestrahlungsmuster (BM) schichtweise eine Kontur (S) und einen, beispielsweise innerhalb der Kontur liegenden, Flächenbereich (FB) umfasst, wobei erste Konturvektoren (KV1) der Kontur (K) für einen kontinuierlichen Bestrahlungsbetrieb und zweite Konturvektoren (KV2) der Kontur (K) für einen gepulsten Bestrahlungsbetrieb festgelegt werden.

2. Verfahren gemäß Anspruch 1, wobei die Kontur (K) Bereiche des Bauteils (10) mit einer definierten Oberflächen- oder Strukturgüte und/oder einer definierten Maßhaltigkeit umfasst.

3. Verfahren gemäß einem der Ansprüche 1 oder 2, wobei das Bestrahlungsmuster (BM) abhängig von einem Überhangwinkel (α) einzelner Querschnittsbereiche des Bauteils (10) definiert wird.

4. Verfahren gemäß einem der vorhergehenden Ansprüche, wobei - für das Bestrahlungsmuster - weitere Bestrahlungsparameter, wie Vektorlänge, Pulslänge, Scan- oder Bestrahlungsgeschwindigkeit, Laserleistung, Spur- oder Streifenabstand und/oder Streifenbreite, festgelegt werden.

5. Verfahren gemäß einem der vorhergehenden Ansprüche, wobei eine Vektorlänge der ersten und/oder der zweiten Konturvektoren der Kontur eine Länge zwischen 50 und 200 µm aufweist und wobei die Bestrahlungsparameter eine Scangeschwindigkeit von weniger als 200 mm/s umfassen.

6. Verfahren zum Bereitstellen eines Datensatzes für das selektive Bestrahlen einer Materialschicht (S) gemäß einem der vorhergehenden Ansprüche, umfassend weiterhin das
- Verknüpfen von Bestrahlungsparametern zumindest der zweiten Konturvektoren (KV2) mit den Geometriedaten in einem gemeinsamen Datensatz (DS).

7. Verfahren gemäß Anspruch 6, wobei der Datensatz (DS) zusätzlich Materialinformationen des Bauteils (10) und/oder eines Ausgangsmaterials dafür enthält, und wobei diese ebenfalls in dem Datensatz (DS) verknüpft werden.

8. Vorrichtung (300) zum selektiven Bestrahlen einer Materialschicht in der additiven Herstellung, welche geeignet ist, ein Verfahren gemäß einem der vorhergehenden Ansprüche durchzuführen, weiterhin umfassend eine Energiestrahlquelle (20) zum selektiven Bestrahlen einer Materialschicht, wobei die Vorrichtung (200) ausgebildet ist, einen kontinuierlichen als auch einen gepulsten Bestrahlungsbetrieb zu ermöglichen.

9. Vorrichtung gemäß Anspruch 8, weiterhin umfassend einen Pulsgenerator (40).

10. Vorrichtung gemäß Anspruch 8, wobei die Energiestrahlquelle (20) eine erste Energiestrahlquelle ist für einen kontinuierlichen Bestrahlungsbetrieb, und die Vorrichtung (200) mindestens eine zweite Energiestrahlquelle (20') umfasst für einen gepulsten Bestrahlungsbetrieb der Kontur (K).

11. Additives Herstellungsverfahren, umfassend ein Verfahren gemäß einem der Ansprüche 1 bis 7, wobei das selektive Bestrahlen mittels eines Lasers oder eines Elektronenstrahls erfolgt, und die Materialschicht eine Pulverschicht ist.

12. Additives Herstellungsverfahren gemäß Anspruch 11, wobei die Pulverschicht eine, insbesondere gehärtete, nickel- oder kobaltbasierte Superlegierung, und das Bauteil (10) eine im Heißgaspfad einer Strömungsmaschine anzuwendende Komponente ist.

13. Bauteil (10), welches gemäß Anspruch 11 oder 12 hergestellt oder herstellbar ist, weiterhin umfassend - im Vergleich zu einem gemäß dem Stand der Technik hergestellten Bauteil - eine um 50 bis 100 % verbesserte Oberflächen- oder Strukturgüte und/oder Maßhaltigkeit.

14. Computerprogrammprodukt umfassend Befehle, die bei der Ausführung des Programms durch einen Computer (200), diesen veranlassen, das schichtweise Festlegen des Bestrahlungsmusters (BM) gemäß Anspruch 1 und/oder das Verknüpfen gemäß Anspruch 6 durchzuführen.
